# EUROPEAN PATENT APPLICATION

(11) **EP 3 200 370 A1**
(43) Date of publication of application: **02.08.2017**
(21) Application number: 15758505.0
(22) Date of filing: 28.01.2015
(51) Int. Cl.: H04L 1/00

(54) **METHOD, BASE STATION, AND TERMINAL FOR ENHANCING ADAPTIVE MODULATION AND CODING PERFORMANCE OF CLUSTER SYSTEM**

(30) Priority: 25.09.2014 CN 201410500064
(71) Applicant: ZTE Corporation, Shenzhen, Guangdong 518057 (CN)
(72) Inventor: MENG, Qingfeng, Shenzhen Guangdong 518057 (CN)
(74) Representative: Novagraaf Technologies
(86) International application number: PCT/CN2015/071759
(87) International publication number: WO 2015/131727

(57) **Abstract**

Provided is a method for enhancing Adaptive Modulation and Coding (AMC) performance of a trunking system, a method, applicable to a trunking terminal, for enhancing AMC performance of a trunking system, a method, applicable to a core network device, for enhancing AMC performance of a trunking system, and a corresponding base station, trunking terminal, and core network device. The method includes that information of channel quality reported by a trunking terminal is received; and when it is determined that the channel quality reported by the trunking terminal is lower than a threshold, a paging message is transmitted to the trunking terminal, wherein the paging message is used for triggering Radio Resource Control (RRC) connection establishment. The technical solutions of the present disclosure can solve the problem of low coding or decoding efficiency of the entire group caused by a signal with poor quality of the few terminals in the group, thereby effectively improving the system capacity without impacting the coding efficiency of group users.

## Description

### Technical Field

The present disclosure relates to the technical field for enhancing AMC performance of a trunking system, and in particular to a method for enhancing AMC performance of a trunking system, a base station, a terminal, and a core network device.

### Background

Due to time-varying characteristics of a wireless channel, a 4G trunking system adopts an AMC mode similar to traditional Long Term Evolution (LTE) technology so as to adaptively track a link change by dynamically changing a coding mode and a modulation order. A current trunking AMC method includes: when trunking group calling is just set up, an initial Modulation and Coding Scheme (MCS) is provided for group users, and a base station transmits data in the initial MCS. When there is no packet error during a terminal demodulating data, the MCS of group calling will be gradually raised. When there is a packet error during the terminal demodulating data, a currently-detected Channel Quality Indicator (CQI) and an MCS are immediately reported, and the base station records the worst CQI reported in a group and adjusts an MCS of a current group user according to the CQI.

Therefore, the above-mentioned AMC method is relatively conservative for adjusting a group MCS, which is a conservative MCS obtained by a terminal in the group under worst channel conditions. Group communication is a one-to-many-point communication mode, and group users are dispersed and randomly distributed. This conservative MCS may ensure that each user in the group can reliably demodulate downlink coding information; downlink group data transmission is performed on the basis of one shared bearer without feedback of a Hybrid Automatic Repeat Request (HARQ); and closed-loop adjustment cannot be effectively performed on the MCS. Under this circumstance, when the few users are located at an edge of a cell in the group, the quality of a wireless signal is poor, so individual terminals may pull down the MCS of the entire group; and under the same Quality of Service (QoS) requirement, downlink group transmission will occupy more air interface resources, thereby causing reduction of the system capacity.

Therefore, related AMC methods of a trunking system have the defect of low group throughput caused by low coding or decoding efficiency of the entire group.

### Summary

The present disclosure provides a method for enhancing AMC performance of a trunking system, a base station, a terminal, and a core network device, which are capable of solving the technical problem of low coding or decoding efficiency of the entire group caused by a signal with poor quality of the few terminals in the group.

To solve the above-mentioned technical problem, the technical solution is adopted as follows.

A method for enhancing AMC performance of a trunking system may be applied to a base station and may include the following acts.

Information of Channel quality reported by a trunking terminal is received.

When it is determined that the channel quality reported by the trunking terminal is lower than a threshold, a paging message is transmitted to the trunking terminal, wherein the paging message is used for triggering Radio Resource Control (RRC) connection establishment.

In an example embodiment, the act that it is determined that the channel quality reported by the trunking terminal is lower than the threshold may include that:
a CQI value reported by the trunking terminal is compared with a low-threshold parameter value of a trunking CQI, and when the CQI value reported by the trunking terminal is lower than the low-threshold parameter value of the trunking CQI, it is determined that the channel quality reported by the trunking terminal is lower than the threshold;
wherein the information of the channel quality includes the CQI value; and the threshold is the low-threshold parameter value of the trunking CQI.

A method for enhancing AMC performance of a trunking system may be applied to a trunking terminal and may include the following acts.

Information of channel quality is reported to a base station.

After a paging message transmitted by the base station is received, an RRC connection establishment request is initiated, wherein the paging message is used for triggering RRC connection establishment.

After the RRC connection establishment is completed, a service request message is transmitted to a core network device, wherein the service request message is used for requesting to establish a dedicated bearer.

After establishment of the dedicated bearer is completed, a group downlink shared bearer established previously is released.

In an example embodiment, the act that the information of the channel quality is reported to a base station may include that:
downlink group data are received, and a block error rate and a CQI value are monitored in real time; and
when it is determined that the block error rate reaches a threshold, the information of the channel quality is reported to the base station;
wherein the information of the channel quality includes the CQI value.

In an example embodiment, the act that a group downlink shared bearer established previously is released may include that:
a notification message transmitted by the core network device is received, and then the group downlink shared bearer established previously is released, wherein the notification message is used for releasing the group downlink shared bearer.

A method for enhancing AMC performance of a trunking system may be applied to a core network device and may include the following acts.

A service request message transmitted by a trunking terminal is received, wherein the service request is used for requesting to establish a dedicated bearer.

The dedicated bearer is established for the trunking terminal.

In an example embodiment, after the dedicated bearer is established for the trunking terminal, the method may further include that:
after establishment of the dedicated bearer is completed, a notification message is transmitted to the trunking terminal, wherein the notification message is used for releasing a group downlink shared bearer.

In an example embodiment, the core network device may be a Push-to-Talk Dispatching Server (PDS).

A base station may include a group channel quality management component and a service control component, wherein
the group channel quality management component is arranged to receive information of channel quality reported by a trunking terminal, and notify the service control component when it is determined that the channel quality reported by the trunking terminal is lower than a threshold; and
the service control component is arranged to transmit a paging message to the trunking terminal after receiving the notification of the group channel quality management component, wherein the paging message is used for triggering RRC connection establishment.

In an example embodiment, the group channel quality management component may be arranged to determine that the channel quality reported by the trunking terminal is lower than the threshold in following manners:
comparing a CQI value reported by the trunking terminal with a low-threshold parameter value of a trunking CQI, and when the CQI value reported by the trunking terminal is lower than the low-threshold parameter value of the trunking CQI, determining that the channel quality reported by the trunking terminal is lower than the threshold;
wherein the information of the channel quality comprises the CQI value, and the threshold is the low-threshold parameter value of the trunking CQI.

A trunking terminal may include a channel quality reporting component, a paging receiving and processing component, a dedicated bearer request component and a release component, wherein
the channel quality reporting component is arranged to report information of channel quality to a base station;
the paging receiving and processing component is arranged to initiate an RRC connection establishment request after a paging message transmitted by the base station is received, wherein the paging message is used for triggering RRC connection establishment;
the dedicated bearer request component is arranged to transmit a service request message to a core network device after the RRC connection establishment is completed, wherein the service request message is used for requesting to establish a dedicated bearer; and
the release component is arranged to release a group downlink shared bearer established previously after establishment of the dedicated bearer is completed.

In an example embodiment, the channel quality reporting component may be arranged to report the information of the channel quality to the base station in following manners:
receiving downlink group data, and monitoring a block error rate and a CQI value in real time; and
when it is determined that the block error rate reaches a threshold, reporting the information of the channel quality to the base station;
wherein the information of the channel quality includes the CQI value.

In an example embodiment, the release component may be arranged to release the group downlink shared bearer established previously in following manners:
receiving a notification message transmitted by the core network device, and then releasing the group downlink shared bearer established previously, wherein the notification message is used for releasing the group downlink shared bearer.

A core network device may include a service request receiving component and a dedicated bearer establishment component, wherein
the service request receiving component is arranged to receive a service request message transmitted by a trunking terminal, wherein the service request is used for requesting to establish a dedicated bearer; and
the dedicated bearer establishment component is arranged to establish the dedicated bearer for the trunking terminal.

In an example embodiment, the core network device may further include a notification component, wherein
the notification component is arranged to transmit a notification message to the trunking terminal after establishment of the dedicated bearer is completed, wherein the notification message is used for releasing a group downlink shared bearer.

In an example embodiment, the core network device may be a PDS.

Compared with the related art, the method for enhancing the AMC performance of the trunking system, the base station, the terminal and the core network device provided in the technical solution of the present disclosure consider comprehensively the capacity of the trunking system and the time-varying characteristics of a wireless channel, and establish an RRC connection for a remote terminal independently for the situation of low coding or decoding efficiency of the entire group caused by a signal with poor quality of the few remote terminals in the group, thereby effectively improving the system capacity without impacting the coding efficiency of group users.

### Brief Description of the Drawings

Fig. 1 is a flowchart of a method (applicable to a base station) for enhancing AMC performance of a trunking system according to an embodiment of the present disclosure;
Fig. 2 is a flowchart of a method (applicable to a trunking terminal) for enhancing AMC performance of a trunking system according to an embodiment of the present disclosure;
Fig. 3 is a flowchart of a method (applicable to a core network device) for enhancing AMC performance of a trunking system according to an embodiment of the present disclosure;
Fig. 4 is a structural diagram of a base station according to an embodiment of the present disclosure;
Fig. 5 is a structural diagram of a trunking terminal according to an embodiment of the present disclosure;
Fig. 6 is a structural diagram of a core network device according to an embodiment of the present disclosure;
Fig. 7 is a structural diagram of a trunking system according to an embodiment of the present disclosure; and
Fig. 8 is an overall flowchart of a method for enhancing AMC performance of a trunking system according to an embodiment of the present disclosure.

### Detailed Description of the Embodiments

The embodiments of the present disclosure will be illustrated below with reference to the drawings in detail. It is important to note that the embodiments of the present application and the characteristics in the embodiments may be combined under the condition of no conflicts.

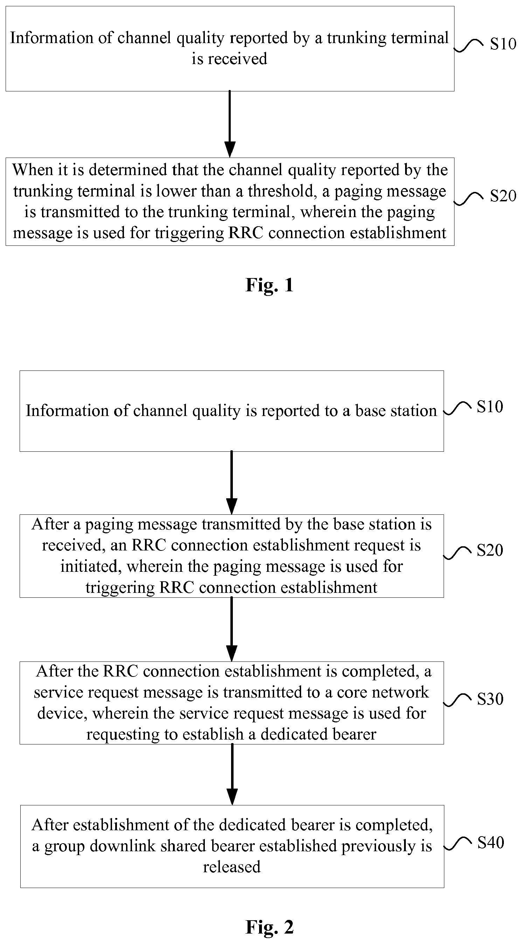

As shown in Fig. 1, the embodiments of the present disclosure provide a method for enhancing AMC performance of a trunking system, which is applied to a base station and includes the following acts.

At act S10, information of channel quality reported by a trunking terminal is received.

At act S20, when it is determined that the channel quality reported by the trunking terminal is lower than a threshold, a paging message is transmitted to the trunking terminal, wherein the paging message is used for triggering RRC connection establishment;
wherein the information of the channel quality includes a CQI value;
wherein the threshold is a low-threshold parameter value of a trunking CQI.

At act S20, the act that it is determined that the channel quality reported by the trunking terminal is lower than the threshold includes that a CQI value reported by the trunking terminal is compared with a low-threshold parameter value of a trunking CQI, and when the CQI value reported by the trunking terminal is lower than the low-threshold parameter value of the trunking CQI, it is determined that the channel quality reported by the trunking terminal is lower than the threshold.

In an example embodiment,, the act that the paging message is transmitted to the trunking terminal includes the following act.

The paging message is transmitted to a group where the trunking terminal is located, and a paging identifier in the paging message is a terminal identifier of the trunking terminal.

In an example embodiment, before the act S10, the method further includes the following act.

A low-threshold parameter value of a trunking CQI is configured;
for example, a management platform of the base station configures the low-threshold parameter value of the trunking CQI.

The embodiments of the present disclosure also disclose a computer program, which includes a program instruction. When the program instruction is executed by a computer, the computer may execute any method for enhancing AMC performance of a trunking system at a base station side.

A carrier carrying the computer program is provided.

As shown in Fig. 2, the embodiments of the present disclosure provide a method for enhancing AMC performance of a trunking system, which is applied to a trunking terminal and includes the following acts.

At act S10, information of channel quality is reported to a base station.

At act S20, after a paging message transmitted by the base station is received, an RRC connection establishment request is initiated, wherein the paging message is used for triggering RRC connection establishment.

At act S30, after the RRC connection establishment is completed, a service request message is transmitted to a core network device, wherein the service request message is used for requesting to establish a dedicated bearer.

At act S40, after establishment of the dedicated bearer is completed, a group downlink shared bearer established previously is released.

In an example embodiment, the act that the information of the channel quality is reported to the base station includes the following acts.

Downlink group data are received, and a block error rate and a CQI value are monitored in real time; and
when it is determined that the block error rate reaches a threshold, the information of the channel quality is reported to the base station;
wherein the information of the channel quality includes the CQI value.

In an example embodiment, the act that the information of the channel quality is reported to the base station includes that a terminal state report is reported to the base station via a random access process, and the terminal state report carries a terminal identifier of a group terminal and the detected CQI value.

In an example embodiment, the act that the group downlink shared bearer established previously is released includes the following act.

A notification message transmitted by the core network device is received, and then the group downlink shared bearer established previously is released, wherein the notification message is used for releasing the group downlink shared bearer.

The embodiments of the present disclosure also disclose a computer program, which includes a program instruction. When the program instruction is executed by a computer, the computer may execute any method for enhancing AMC performance of a trunking system at a trunking terminal side.

A carrier carrying the computer program is provided.

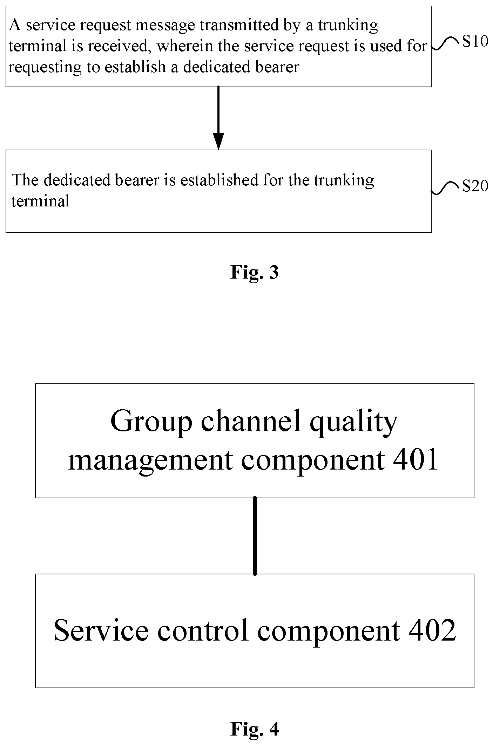

As shown in Fig. 3, the embodiments of the present disclosure provide a method for enhancing AMC performance of a trunking system, which is applied to a core network device and includes the following acts.

At act S10, a service request message transmitted by a trunking terminal is received, wherein the service request is used for requesting to establish a dedicated bearer.

At act S20, the dedicated bearer is established for the trunking terminal.

In an example embodiment, after the act S20, the method further includes the act S30.

At act S30, after establishment of the dedicated bearer is completed, a notification message is transmitted to the trunking terminal, wherein the notification message is used for releasing a group downlink shared bearer.

In an example embodiment, the core network device is a PDS.

In an example embodiment, the act that the dedicated bearer is established for the trunking terminal includes following acts.

Establishment of the dedicated bearer is completed together with a base station; and
a group terminal is notified to establish a corresponding dedicated bearer,
wherein the dedicated bearer is used for downlink data transmission.

The embodiments of the present disclosure also disclose a computer program, which includes a program instruction. When the program instruction is executed by a computer, the computer may execute any method for enhancing AMC performance of a trunking system at a core network device side.

A carrier carrying the computer program is provided.

As shown in Fig. 4, the embodiments of the present disclosure provide a base station, which includes the following components.

A group channel quality management component 401 is arranged to receive information of channel quality reported by a trunking terminal, and notify the service control component when it is determined that the channel quality reported by the trunking terminal is lower than a threshold; and
the service control component 402 is arranged to transmit a paging message to the trunking terminal after receiving the notification of the group channel quality management component 401, wherein the paging message is used for triggering RRC connection establishment.

In an example embodiment, the group channel quality management component 401 is arranged to determine that the channel quality reported by the trunking terminal is lower than the threshold in the following manners.

A CQI value reported by the trunking terminal is compared with a low-threshold parameter value of a trunking CQI, and when the CQI value reported by the trunking terminal is lower than the low-threshold parameter value of the trunking CQI, it is determined that the channel quality reported by the trunking terminal is lower than the threshold;
wherein the information of the channel quality includes the CQI value, and the threshold is the low-threshold parameter value of the trunking CQI.

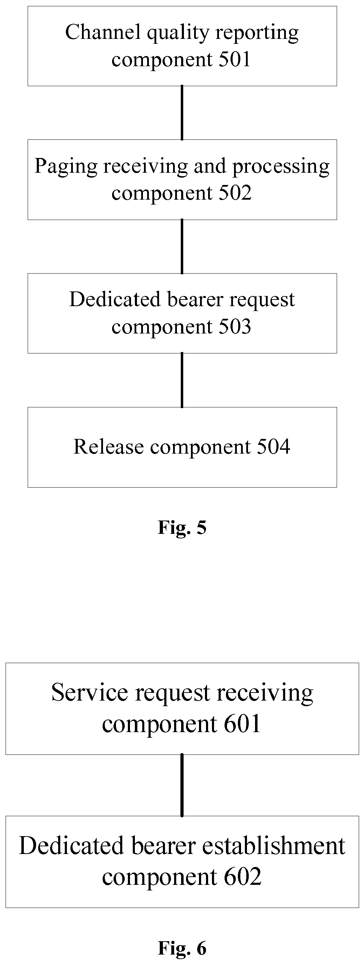

As shown in Fig. 5, the embodiments of the present disclosure provide a trunking terminal, which includes the following components.

A channel quality reporting component 501 is arranged to report information of channel quality to a base station;
a paging receiving and processing component 502 is arranged to initiate an RRC connection establishment request after a paging message transmitted by the base station is received, wherein the paging message is used for triggering RRC connection establishment;
a dedicated bearer request component 503 is arranged to transmit a service request message to a core network device after the RRC connection establishment is completed, wherein the service request message is used for requesting to establish a dedicated bearer; and
a release component 504 is arranged to release a group downlink shared bearer established previously after establishment of the dedicated bearer is completed.

In an example embodiment, the channel quality reporting component 501 is arranged to report the information of the channel quality to the base station in the following manners.

Downlink group data is received, and a block error rate and a CQI value are monitored in real time; and
when it is determined that the block error rate reaches a threshold, reporting the information of the channel quality to the base station;
wherein the information of the channel quality includes the CQI value.

In an example embodiment, the release component 504 is further arranged to release the group downlink shared bearer established previously in the following manners.

A notification message transmitted by the core network device is received, and then the group downlink shared bearer established previously is realised, wherein the notification message is used for releasing the group downlink shared bearer.

As shown in Fig. 6, the embodiments of the present disclosure provide a core network device, which includes the following components.

A service request receiving component 601 is arranged to receive a service request message transmitted by a trunking terminal, wherein the service request is used for requesting to establish a dedicated bearer; and
a dedicated bearer establishment component 602 is arranged to establish the dedicated bearer for the trunking terminal.

In an example embodiment, the core network device further includes a notification component.

The notification component is arranged to transmit a notification message to the trunking terminal after establishment of the dedicated bearer is completed, wherein the notification message is used for releasing a group downlink shared bearer.

In an example embodiment, the core network device is a PDS.

In an example embodiment, the dedicated bearer establishment component 602 is arranged to establish the dedicated bearer for the trunking terminal in the following manners.

Establishment of the dedicated bearer is completed together with a base station; and
a group terminal is notified to establish a corresponding dedicated bearer,
wherein the dedicated bearer is used for downlink data transmission.

### Embodiment 1:

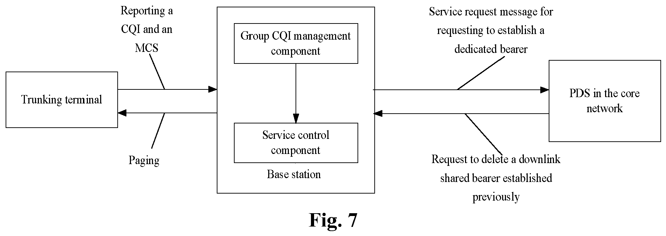

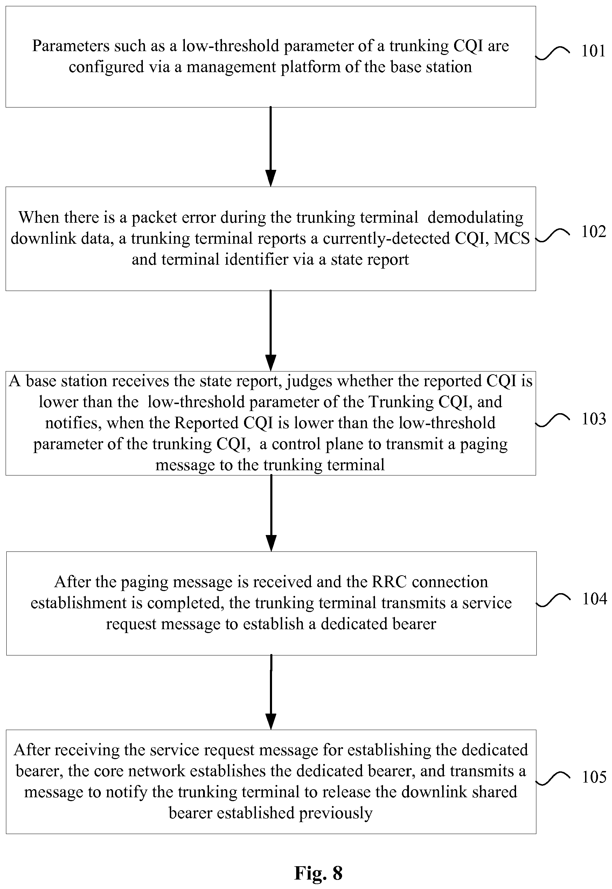

As shown in Fig. 7, a trunking system of the present disclosure includes a base station, a trunking terminal and a core network device. The base station includes a group CQI management component and a service control component. Fig. 8 shows an embodiment of a method for independently establishing an RRC connection for a remote terminal in a trunking group. The method includes the following acts.

At act 101, a management platform of the base station (an operation and maintenance centre) configures parameters such as a low-threshold parameter of a trunking CQI. Specifically,
(1) the operation and maintenance centre configures the low-threshold parameter of the trunking CQI; and
(2) the operation and maintenance centre synchronizes the low-threshold parameter of the trunking CQI to the group CQI management component of the base station.

At act 102, when there is a packet error during the trunking terminal demodulating downlink data, the trunking terminal reports a currently-detected CQI and MCS value. Specifically,
(1) the trunking terminal receives group data, and monitors a block error rate and a wireless parameter CQI in real time;
(2) when monitoring that there is a packet error, the trunking terminal needs to transmit a state report to notify the base station, wherein the state report includes the currently-detected CQI and MCS and further includes a terminal identifier; and
(3) the trunking terminal reports the state report via a random access process.

At act 103, the base station receives the CQI reported by the trunking terminal; compares the CQI with the configured low-threshold parameter of the trunking CQI; and transmits a paging message to trigger the trunking terminal to initiate RRC connection establishment when the CQI is lower than low-threshold parameter of the trunking CQI. Specifically,
(1) the base station receives the state report, and acquires the CQI, the MCS and the terminal identifier in the state report;
(2) the group CQI management component of the base station judges whether the reported CQI is lower than the low-threshold parameter of the trunking CQI, and when the reported CQI is lower than the low-threshold parameter of the trunking CQI, a paging message is transmitted to trigger a notification operation for notifying a control plane of the base station to transmit a paging message to the trunking terminal, wherein the notification message includes the terminal identifier; and
(3) when the control plane of the base station receives the paging trigger message, the paging message is assembled and transmitted to the trunking terminal, wherein a paging identifier in the paging message is the terminal identifier.

At act 104, after the paging message is received and the RRC connection establishment is completed, the trunking terminal transmits a service request message to establish a dedicated bearer. Specifically,
(1) when the trunking terminal finds out that the trunking terminal itself is paged after receiving the paging message, an RRC connection establishment process is initiated; and
(2) the trunking terminal completes the RRC connection establishment, and transmits the service request message to a core network to request to establish a dedicated bearer; and
   the trunking terminal may receive downlink data via a group downlink shared bearer at this time.

At act 105, after receiving the service request message for establishing the dedicated bearer, the core network establishes the dedicated bearer, and transmits a message to notify the trunking terminal to release the downlink shared bearer established previously. Specifically,
(1) a PDS in the core network receives the service request message transmitted by the trunking terminal, and completes establishment of the dedicated bearer together with the base station;
(2) the core network notifies the trunking terminal to establish the corresponding dedicated bearer; and
(3) the core network notifies the trunking terminal to release the shared bearer, established previously, for transmitting downlink data.

And then the core network transmits the downlink data to the trunking terminal via the dedicated bearer.

The method for enhancing the AMC performance of the trunking system, the base station, the terminal and the core network device provided in the above-mentioned embodiments consider comprehensively the capacity of the trunking system and the time-varying characteristics of a wireless channel, and establish an RRC connection for a remote terminal independently for the situation of low coding or decoding efficiency of the entire group caused by a signal with poor quality of the few remote terminals in the group, thereby effectively improving the system capacity without impacting the coding efficiency of group users.

Those of ordinary skill in the art may understand that all or some acts in the above-mentioned method may be completed by instructing relevant hardware via a program, and the program may be stored in a computer-readable storage medium such as a read-only memory, a magnetic disk or an optical disc. Alternatively, all or some acts in the above-mentioned embodiments may be implemented by using one or more integrated circuits. Correspondingly, each component/unit in the above-mentioned embodiments may be implemented in a hardware form or may be implemented in a software function component form. The present disclosure is not limited to a combination of any specific hardware and software.

It is important to note that the present disclosure may also have other multiple embodiments. Those skilled in the art may make various corresponding variations and modifications according to the present disclosure without departing from the spirit and essence of the present disclosure, but these corresponding variations and modifications shall fall within the scope of protection of the attached claims of the present disclosure.

### Industrial Applicability

According to the method for enhancing the AMC performance of the trunking system, the base station, the terminal and the core network device provided in the technical solution of the present disclosure consider comprehensively the capacity of the trunking system and the time-varying characteristics of a wireless channel, and establish an RRC connection for a remote terminal independently for the situation of low coding or decoding efficiency of the entire group caused by a signal with poor quality of the few remote terminals in the group, thereby effectively improving the system capacity without impacting the coding efficiency of group users. Therefore, the present disclosure has great industrial applicability.

## Claims

1. A method for enhancing Adaptive Modulation and Coding, AMC, performance of a trunking system, applied to a base station, the method comprising:
receiving information of channel quality reported by a trunking terminal; and
when it is determined that the channel quality reported by the trunking terminal is lower than a threshold, transmitting a paging message to the trunking terminal, wherein the paging message is used for triggering Radio Resource Control, RRC, connection establishment.

2. The method for enhancing the AMC performance of the trunking system as claimed in claim 1, wherein determining that the channel quality reported by the trunking terminal is lower than the threshold comprises:
comparing a Channel Quality Indicator, CQI, value reported by the trunking terminal with a low-threshold parameter value of a trunking CQI, and when the CQI value reported by the trunking terminal is lower than the low-threshold parameter value of the trunking CQI, determining that the channel quality reported by the trunking terminal is lower than the threshold;
wherein the information of the channel quality comprises the CQI value; and the threshold is the low-threshold parameter value of the trunking CQI.

3. A method for enhancing Adaptive Modulation and Coding, AMC, performance of a trunking system, applied to a trunking terminal, the method comprising:
reporting information of channel quality to a base station;
after a paging message transmitted by the base station is received, initiating a Radio Resource Control, RRC, connection establishment request, wherein the paging message is used for triggering RRC connection establishment;
after the RRC connection establishment is completed, transmitting a service request message to a core network device, wherein the service request message is used for requesting to establish a dedicated bearer; and
after establishment of the dedicated bearer is completed, releasing a group downlink shared bearer established previously.

4. The method for enhancing the AMC performance of the trunking system as claimed in claim 3, wherein reporting the information of the channel quality to the base station comprises:
receiving downlink group data, and monitoring a block error rate and a Channel Quality Indicator, CQI, value in real time; and
when it is determined that the block error rate reaches a threshold, reporting the information of the channel quality to the base station;
wherein the information of the channel quality comprises the CQI value.

5. The method for enhancing the AMC performance of the trunking system as claimed in claim 3 or 4, wherein releasing the group downlink shared bearer established previously comprises:
receiving a notification message transmitted by the core network device, and then releasing the group downlink shared bearer established previously, wherein the notification message is used for releasing the group downlink shared bearer.

6. A method for enhancing Adaptive Modulation and Coding, AMC, performance of a trunking system, applied to a core network device, the method comprising:
receiving a service request message transmitted by a trunking terminal, wherein the service request is used for requesting to establish a dedicated bearer; and
establishing the dedicated bearer for the trunking terminal.

7. The method for enhancing the AMC performance of the trunking system as claimed in claim 6, wherein after the dedicated bearer is established for the trunking terminal, the method further comprises:
after establishment of the dedicated bearer is completed, transmitting a notification message to the trunking terminal, wherein the notification message is used for releasing a group downlink shared bearer.

8. The method for enhancing the AMC performance of the trunking system as claimed in claim 6 or 7, wherein the core network device is a Push-to-Talk Dispatching Server, PDS.

9. A base station, comprising a group channel quality management component and a service control component, wherein
the group channel quality management component is arranged to receive information of channel quality reported by a trunking terminal, and notify the service control component when it is determined that the channel quality reported by the trunking terminal is lower than a threshold; and
the service control component is arranged to transmit a paging message to the trunking terminal after receiving the notification of the group channel quality management component, wherein the paging message is used for triggering RRC connection establishment.

10. The base station as claimed in claim 9, wherein the group channel quality management component is arranged to determine that the channel quality reported by the trunking terminal is lower than the threshold in following manners:
comparing a Channel Quality Indicator, CQI, value reported by the trunking terminal with a low-threshold parameter value of a trunking CQI, and when the CQI value reported by the trunking terminal is lower than the low-threshold parameter value of the trunking CQI, determining that the channel quality reported by the trunking terminal is lower than the threshold;
wherein the information of the channel quality comprises the CQI value, and the threshold is the low-threshold parameter value of the trunking CQI.

11. A trunking terminal, comprising a channel quality reporting component, a paging receiving and processing component, a dedicated bearer request component and a release component, wherein
the channel quality reporting component is arranged to report information of channel quality to a base station;
the paging receiving and processing component is arranged to initiate a Radio Resource Control, RRC, connection establishment request after a paging message transmitted by the base station is received, wherein the paging message is used for triggering RRC connection establishment;
the dedicated bearer request component is arranged to transmit a service request message to a core network device after the RRC connection establishment is completed, wherein the service request message is used for requesting to establish a dedicated bearer; and
the release component is arranged to release a group downlink shared bearer established previously after establishment of the dedicated bearer is completed.

12. The trunking terminal as claimed in claim 11, wherein the channel quality reporting component is arranged to report the information of the channel quality to the base station in following manners:
receiving downlink group data, and monitoring a block error rate and a Channel Quality Indicator, CQI, value in real time; and
when it is determined that the block error rate reaches a threshold, reporting the information of the channel quality to the base station;
wherein the information of the channel quality comprises the CQI value.

13. The trunking terminal as claimed in claim 11 or 12, wherein the release component is arranged to release the group downlink shared bearer established previously in following manners:
receiving a notification message transmitted by the core network device, and then releasing the group downlink shared bearer established previously, wherein the notification message is used for releasing the group downlink shared bearer.

14. A core network device, comprising a service request receiving component and a dedicated bearer establishment component, wherein
the service request receiving component is arranged to receive a service request message transmitted by a trunking terminal, wherein the service request is used for requesting to establish a dedicated bearer; and
the dedicated bearer establishment component is arranged to establish the dedicated bearer for the trunking terminal.

15. The core network device as claimed in claim 14, further comprising a notification component, wherein
the notification component is arranged to transmit a notification message to the trunking terminal after establishment of the dedicated bearer is completed, wherein the notification message is used for releasing a group downlink shared bearer.

16. The core network device as claimed in claim 14 or 15, wherein
the core network device is a Push-to-Talk Dispatching Server, PDS.
